# EUROPÄISCHE PATENTSCHRIFT

(11) **EP 1 859 872 B1**
(45) Veröffentlichungstag und Bekanntmachung des Hinweises auf die Patenterteilung: **28.07.2010**
(21) Anmeldenummer: 07007142.8
(22) Anmeldetag: 05.04.2007
(51) Int. Cl.: B05B 12/14, F16K 27/00

(54) **Wechseleinheit für Beschichtungsmaterial**
Coating material changing unit
Bloc changeur de produit de revêtement

(30) Priorität: 26.05.2006 DE 102006024633
(43) Veröffentlichungstag der Anmeldung: 28.11.2007
(73) Patentinhaber: EISENMANN Anlagenbau GmbH & Co. KG, 71032 Böblingen (DE)
(72) Erfinder: Albrecht, Markus, 74232 Abstatt (DE); Reichler, Jan, 78465 Konstanz (DE)
(74) Vertreter: Ostertag, Ulrich

(56) Entgegenhaltungen:
- EP-A- 1 134 027
- WO-A-02/057023
- AT-B- 231 592
- US-A- 4 798 341
- US-A- 4 830 055
- US-A1- 2002 139 301
- US-A1- 2003 234 300

## Beschreibung

Die Erfindung betrifft eine Wechseleinheit für Beschichtungsmaterial gemäß dem Oberbegriff des Anspruchs 1.

Bei Beschichtungsanlagen, insbesondere bei Lackieranlagen, werden häufig Applikationseinrichtungen eingesetzt, welche das von ihnen zu versprühende Beschichtungsmaterial mittels einer Hochspannungselektrode ionisieren. Dieses ionisierte Material wird dann aufgrund elektrostatischer Kräfte auf im allgemeinen auf Massepotential liegende zu beschichtende Gegenstände gezogen.

Bei Lackieranlagen kommt es häufig vor, daß für die Beschichtung eines Gegenstandes ein anderer Lack verwendet werden soll als derjenige Lack, mit welchem ein vorhergehender Gegenstand lackiert wurde. Dies bedeutet, daß der der Applikationseinrichtung zugeführte Lack gewechselt werden muss. Für diesen Zweck haben sich sogenannte Farbwechseleinheiten etabliert, wie sie beispielsweise aus der EP 1 351 776 A1 bekannt sind. Die dort beschriebene Farbwechseleinheit ist modular aufgebaut, wobei der Hauptkanal durch Aneinandersetzen der einzelnen Module verlängert wird. Die einzelnen Farbwechselmodule liegen mit Stoßflächen aneinander an. Wird eine derartige Farbwechseleinheit an beispielsweise einem Roboterarm in der Nähe einer auf hohem elektrischen Potential stehenden Applikationseinrichtung, wie z.B. einer Spritzpistole, montiert, so besteht die Gefahr, daß es über die Stoßflächen der Farbwechseleinheit zu einem Spannungsüberschlag zwischen der Farbwechseleinheit und einem auf Massepotential liegenden Gegenstand, beispielsweise einer zu lakkierenden Fahrzeugkarosserie, kommt. Zu einem Spannungsüberschlag kann es insbesondere kommen, wenn die Farbwechseleinheit bei der Bewegung des Roboterarms an einer Fahrzeugkarosserie vorbei einen bestimmten Mindestabstand unterschreitet. Letzteres läßt sich im Rahmen des Bewegungsablaufes, den der Roboterarm beim Lackiervorgang ausführt, häufig nicht vermeiden. Darüber hinaus kann die Farbwechseleinheit beim Lackiervorgang so dicht an Teilen des Roboters selbst vorbeibewegt werden, daß es auch zwischen der Farbwechseleinheit und dem Roboter zu einem Spannungsüberschlag kommen kann.

Derartige, gegebenenfalls mit Entladungsfunken verbundene Spannungsüberschläge innerhalb einer Beschichtungsanlage und besonders in einer Lackieranlage sind unbedingt zu vermeiden, da sie im schlimmsten Fall eine Explosion auslösen können und somit ein hohes Sicherheitsrisiko darstellen.

US 2003/0 234 300 A1, US 2002/0 139 301 A2, EP 1 134 027 A2 und AT 231 592 offenbaren gattungsgemäße Wechseleinheiten.

Aufgabe der Erfindung ist es daher, eine Wechseleinheit für Beschichtungsmaterial zur Verwendung mit einer auf hohem elektrischen Potential stehenden Applikationseinrichtung der Eingangs genannten Art zu schaffen, bei welcher die Gefahr eines Spannungsüberschlages vermindert ist.

Diese Aufgabe wird durch eine Wechseleinheit gemäß Anspruch 1 gelöst.

Auf diese Weise bleibt das Gehäuse selbst trotz der hohen Spannung, unter welcher die Applikationseinrichtung und gegebenenfalls auch das Beschichtungsmaterial im Innern der Wechseleinheit steht, im allgemeinen auf niedrigem Potential, so daß beim Vorüberfahren des Gehäuses der Wechseleinheit an einem Gegenstand, welcher ebenfalls auf niedrigem Potential liegt, kein Spannungsüberschlag erfolgt. Auf Grund der Einstückigkeit des Gehäuses werden einander benachbarte Stoßflächen, wie es beim Stand der Technik vorliegt, vermieden, was wiederum die Gefahr eines Spannungsüberschlages weiter vermindert.

Vorteilhafte Weiterbildungen sind in den abhängigen Ansprüchen angegeben.

Insbesondere ist es vorteilhaft, wenn das Gehäuse aus Kunststoff gebildet ist. Elektrisch nicht leitfähige Kunststoffe sind hinreichend bekannt, leicht zu beschaffen und gut zu einem Gehäuse verarbeitbar.

Eine weiteres Gefahrenpotential für einen Spannungsüberschlag liegt in außenliegenden scharfen Kanten an der Wechseleinheit. Sind scharfe Kanten an der Außenseite der Wechseleinheit vorhanden, erfolgt ein Spannungsüberschlag bevorzugt über diese Kanten. Diese Gefahr wird auf dadurch vermindert, daß außenliegende Kanten mit einer Fase versehen sind.

Um eine gewisse Vielseitigkeit zu bewirken, ist es günstig, wenn das Gehäuse wenigstens vier Nebenkanäle aufweist. Somit können zumindest vier verschiedene Beschichtungsmaterialien, z.B. Lacke, über die Wechseleinheit ausgewählt werden.

Erfindungsgemäß handelt es sich bei den Mitteln zum Verschließen und Freigeben der Verbindungsstellen zwischen den Nebenkanälen und dem Hauptkanal um Druckluft-betätigte Ventile. Solche Ventile sind handelsüblich und einfach zu installieren sowie anzusteuern.

Nachstehend wird ein Ausführungsbeispiel der Erfindung anhand der Zeichnung näher erläutert. In dieser zeigen:
- Figur 1: eine perspektivische Ansicht einer Farbwechseleinheit für Lacke;
- Figur 2: eine Ansicht der Farbwechseleinheit von Figur 1 aus der Richtung des dortigen Pfeiles A in teilweiser Durchsicht;
- Figur 3: eine Ansicht der Farbwechseleinheit von Figur 1 aus der Richtung des dortigen Pfeiles B in teilweiser Durchsicht;
- Figur 4: eine Ansicht der Farbwechseleinheit von Figur 1 aus der Richtung des dortigen Pfeiles C in teilweiser Durchsicht; und
- Figur 5: einen Schnitt durch die Farbwechseleinheit der Figuren 1 bis 4 entlang der Schnittlinie V-V in Figur 3.

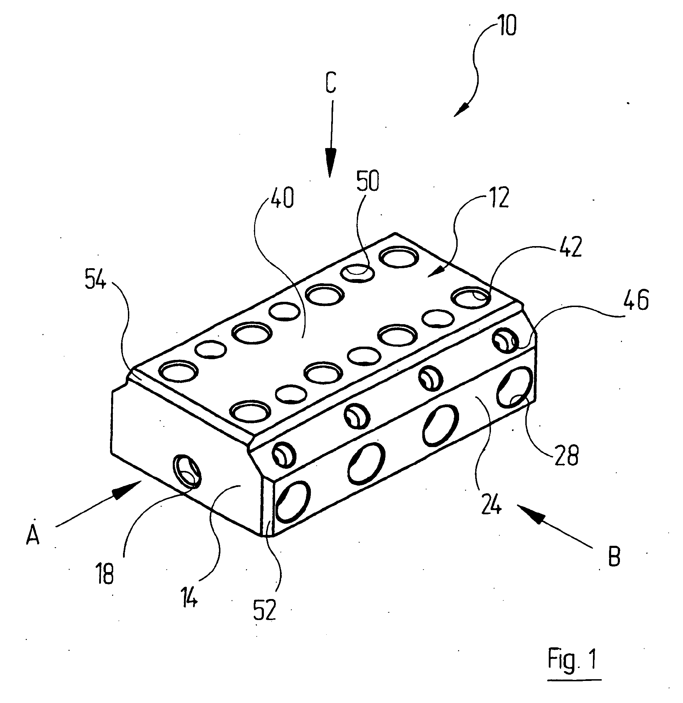

Die Figuren 1 bis 5 zeigen eine Wechseleinheit für Beschichtungsmaterial am Beispiel einer Farbwechseleinheit 10 mit einem einstückigen Gehäuseblock 12.

Auf zwei sich gegenüberliegenden Stirnseiten 14, 16 des Gehäuseblocks 12 ist jeweils eine Anschlußbohrung 18, 20 vorgesehen, welche jeweils in einen zentralen Hauptkanal 22 münden und durch diesen miteinander verbunden sind. Der Hauptkanal 22 kann über die Anschlußbohrungen 18, 20 mit der Versorgungsleitung einer hier nicht dargestellten elektrostatisch arbeitenden Applikationseinrichtung verbunden werden.

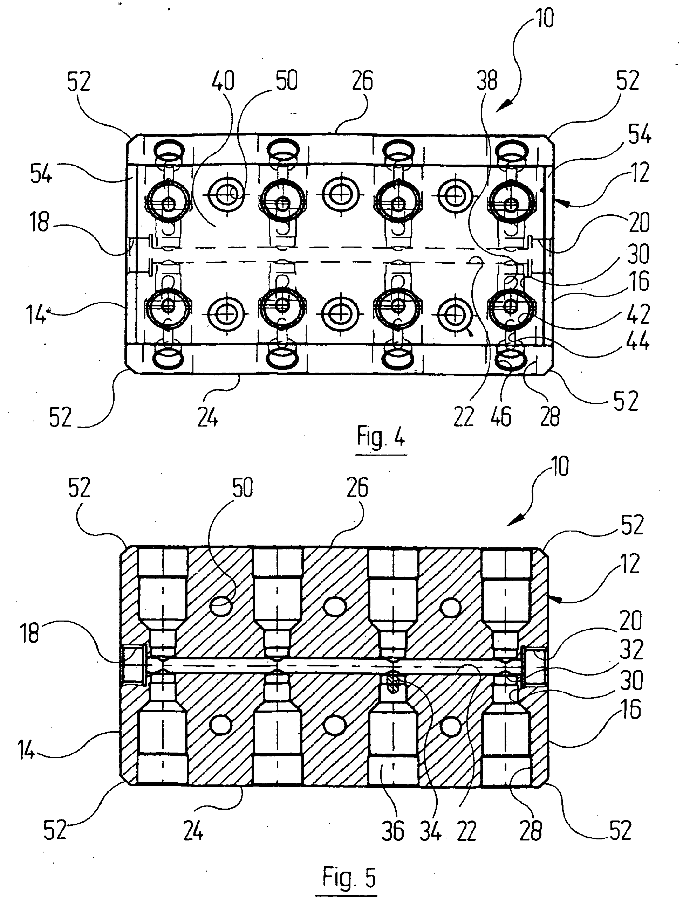

Auf zwei senkrecht zu den Stirnseiten 14, 16 verlaufenden und sich gegenüberliegenden Außenseiten 24, 26 weist der Gehäuseblock 12 Ventilaufnahmebohrungen 28 auf, welche jeweils in zu dem Hauptkanal 22 benachbarten Vorkammern 30 münden. Die Vorkammern 30 wiederum stehen mit dem Hauptkanal 22 über jeweils eine ventilsitzartige Öffnung 32 in Verbindung. Diese Öffnung 32 kann durch das Schließelement 34 eines in der Ventilaufnahmebohrung 28 sitzenden Druckluft-betätigten Ventils 36 verschlossen werden. Ein solches Ventil 36 ist in Figur 5 schematisch angedeutet. Wie dort ebenfalls zu erkennen ist, ist die Innenwand der Ventilaufnahmebohrung 28 zu der Außenwand des Ventils 36 weitgehend komplementär.

Von den Ventilaufnahmebohrungen 28, den Vorkammern 30 und den Öffnungen 32 sind in den Figuren 1 bis 5 jeweils nur eine mit dem entsprechenden Bezugszeichen gekennzeichnet. Beim vorliegenden Ausführungsbeispiel sind insgesamt acht Ventilaufnahmebohrungen 28 vorgesehen, deren Längsachsen senkrecht zum Hauptkanal 22 und parallel zueinander in einer gemeinsamen Ebene verlaufen. In jeder dieser acht Ventilaufnahmebohrungen 28 soll dementsprechend je ein Druckluft-betätigtes Ventil 36 einsitzen. Die Farbwechseleinheit 10 kann jedoch auch andere als die hier gezeigten Abmessungen aufweisen, so daß bis zu 40 oder 50 oder mehr Ventile 36 in entsprechenden Ventilaufnahmebohrungen 28 vorhanden sein können.

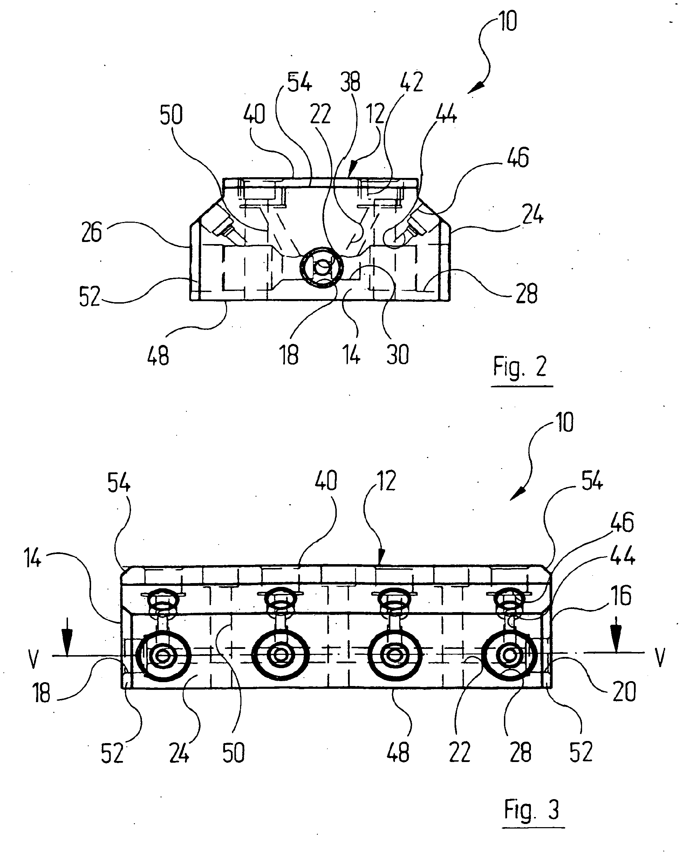

Von den Vorkammern 30 geht jeweils ein Nebenkanal 38 aus, der in Richtung auf eine weitere, von den Stirn- und Außenseiten 14, 16, 24 und 26 umgebene Außenseite 40 verläuft und in eine Anschlußbohrung 42 mündet, die bündig mit der Außenseite 40 abschließt (vgl. Figur 2). Über jede Anschlußbohrung 42 kann die Farbwechseleinheit 10 mit einem Zuleitungsschlauch eines eine bestimmte Farbe aufnehmenden Reservoirs verbunden werden, wobei die beiden letztgenannten Komponenten hier nicht dargestellt sind. Der Nebenkanal 38 ist über die Vorkammer 30 und die Öffnung 32 mit dem Hauptkanal 22 der Farbwechseleinheit 10 verbunden.

Von den Ventilaufnahmebohrungen 28 geht jeweils ein Druckluftkanal 44 aus, welcher jeweils an den Außenseiten 24 bzw. 26 des Gehäuseblocks 12 in einer Anschlußbohrung 46 für einen hier nicht dargestellten Druckluftschlauch einer, hier ebenfalls nicht gezeigten, Ventilsteuerung mündet. Mittels einer an sich bekannten Ventilsteuerung kann das Ventil 36 mit Druckluft beaufschlagt werden, wodurch die Öffnung 32 zum Hauptkanal 22 über das Verschlußelement 34 wahlweise freigegeben oder verschlossen werden kann.

Zwischen der Außenseite 40 mit den Anschlußbohrungen 42 und der dieser gegenüberliegenden Außenseite 48 verlaufen Durchgangsbohrungen 50, durch die Schrauben geführt werden können, mittels derer die Farbwechseleinheit 10 an beispielsweise einem Roboterarm befestigt werden kann. Wie z.B. anhand der Figuren 2 und 3 zu erkennen ist, sind die Durchgangsbohrungen 50 stufig ausgebildet, so daß der Kopf einer entsprechenden Schraube versenkt werden kann.

Der Gehäuseblock 12 ist, wie bereits erwähnt, einstückig ausgebildet, z.B. als Guß- oder Preßteil. Als Material für den Gehäuseblock 12 kommt jedes elektrisch nicht leitfähige Material in Betracht, insbesondere Kunststoff. Bei der Verwendung von Kunststoff sollte insbesondere darauf geachtet werden, daß dieser keinen Graphitanteil aufweist.

Wie insbesondere in Figur 1 zu erkennen ist, sind die Außenkanten an den Außenseiten 14 und 16 größtenteils mit einer Fase versehen, welche die Bezugszeichen 52 und 54 tragen. Auf diese Weise sind scharfe Kanten vermieden, an welchen es bevorzugt zu einem Spannungsüberschlag kommen kann. Auch die Anzahl von spitzen Ecken ist so verringert. Alternativ können anstelle der Fasen 52, 54 auch abgerundete Kanten vorgesehen sein.

Dadurch, daß das Gehäuse 12 der Farbwechseleinheit 10 aus einem nichtleitenden Kunstoff gefertigt ist, ist die Gefahr eines von dem Gehäuse 12 ausgehenden Spannungsüberschlages vermindert. Auch die Tatsache, daß das Gehäuse 12 einstückig ohne aneinander angrenzende Stoßflächen ausgebildet ist, verringert diese Gefahr. Ein weiterer Beitrag zu Erhöhung der Arbeitssicherheit unter dem Aspekt der Verhinderung eines Spannungsüberschlages wird durch die fasierten Kanten geleistet.

## Patentansprüche

1. Wechseleinheit (10) für Beschichtungsmaterial zur
Verwendung mit einer auf hohem elektrischen Potential stehenden Applikationseinrichtung, wobei die Wechseleinheit ein einstückiges Gehäuse (12) aus einem elektrisch nicht leitfähigen Material aufweist, welches umfasst:
a) einen Hauptkanal (22) für Beschichtungsmaterial, welcher mit der Applikationseinrichtung verbindbar ist;
b) mehrere Nebenkanäle (38), welche an einem Ende (42) mit einem Reservoir für Beschichtungsmaterial verbindbar und am anderen Ende (32) mit dem Hauptkanal (22) verbunden sind;
wobei
c) wenigstens ein Druckluft betätigtes Ventil (36) vorgesehen ist, mittels welchem die Verbindungsstelle (32) zwischen einem der Nebenkanäle (38) und dem Hauptkanal (22) wahlweise verschließbar oder freigebbar ist und welches über einen Druckluftkanal (44) mit beaufschlagbar ist;
d) der Druckluftkanal (44) über eine Anschlussöffnung (46) mit einem Druckluftschlauch verbindbar ist;
**dadurch gekennzeichnet dass**,
e) außenliegende Kanten des Gehäuses (12) zumindest teilweise mit einer Fase (52, 54) versehen sind;
f) die Anschlussöffnung (46) des Druckluftkanals (44) in einem mit einer Fase versehenen Bereich des Gehäuses (12) angeordnet ist.

2. Wechseleinheit nach Anspruch 1, **dadurch gekennzeichnet, dass** das Gehäuse (12) aus Kunststoff gebildet ist.

3. Wechseleinheit nach Anspruch 1 oder 2, **dadurch gekennzeichnet, dass** wenigstens vier Nebenkanäle (38) vorgesehen sind.

## Claims

1. Changing unit (10) for coating material for use with an application device at high electric potential, the changing unit comprising a one-piece housing (12) made of a non-electrically conductive material, which comprises:
a) a main channel (22) for coating material, which may be connected to the application device;
b) a plurality of secondary channels (38) which at one end (42) may be connected to a reservoir for coating material and at the other end (32) are connected to the main channel (22) ;
c) at least one valve (36) actuated by compressed air being provided, by means of which the connecting point (32) between one of the secondary channels (38) and the main channel (22) is optionally able to be closed or opened and which may be acted upon by compressed air via a compressed air channel (44) ;
d) the compressed air channel (44) being able to be connected via a connecting opening (46) to a compressed air pipe;
**characterised in that**
e) external edges of the housing (12) are at least partially provided with a bevel (52, 54 ) ;
f) the connecting opening (46) of the compressed air channel (44) is arranged in a region of the housing (12) provided with a bevel.

2. Changing unit according to Claim 1, **characterised in that** the housing (12) is formed from plastics.

3. Changing unit according to Claim 1 or 2, **characterised in that** at least four secondary channels (38) are provided.

## Revendications

1. Unité échangeable (10) pour matériau de revêtement destinée à être utilisée avec un dispositif d'application placé à un potentiel électrique élevé, l'unité échangeable présentant un boîtier (12) en une pièce dans un matériau non conducteur électriquement, lequel comprend :
a) un canal principal (22) pour matériau de revêtement, lequel peut être mis en communication avec le dispositif d'application ;
b) plusieurs canaux secondaires (38), lesquels peuvent être mis en communication avec un réservoir de matériau de revêtement à une extrémité (42) et sont en communication avec le canal principal (22) à l'autre extrémité (32) ;
dans laquelle
c) il est prévu au moins une vanne (36) actionnée par air comprimé au moyen de laquelle le point de communication (32) entre un des canaux secondaires (38) et le canal principal (22) peut être, au choix, fermé ou ouvert, et laquelle peut être soumise à de l'air comprimé via un canal d'air comprimé (44) ;
d) le canal d'air comprimé (44) peut être mis en communication avec un tuyau d'air comprimé via une ouverture de raccordement (46) ;
**caractérisée en ce que**
e) des bords extérieurs du boîtier (12) sont pourvus au moins partiellement d'un chanfrein (52, 54) ;
f) l'ouverture de raccordement (46) du canal d'air comprimé (44) est disposée dans une zone du boîtier (12) pourvue d'un chanfrein.

2. Unité échangeable selon la revendication 1, **caractérisée en ce que** le boîtier (12) est réalisé dans une matière plastique.

3. Unité échangeable selon la revendication 1 ou 2, **caractérisée en ce qu'**au moins quatre canaux secondaires (38) sont prévus.
